# EUROPEAN PATENT SPECIFICATION

(11) **EP 0 748 669 B1**
(45) Date of publication and mention of the grant of the patent: **29.04.1998**
(21) Application number: 96303699.1
(22) Date of filing: 23.05.1996
(51) Int. Cl.: B23Q 1/48, G01B 5/00, B23Q 5/34, B23Q 16/02

(54) **Probe arm for machine tool**
Probearm für Werkzeugmaschinen
Bras de soude pour machine-outil

(30) Priority: 12.06.1995 GB 9511856
(43) Date of publication of application: 18.12.1996
(73) Proprietor: Renishaw plc, Wotton-Under-Edge Gloucestershire GL12 8JR (GB)
(72) Inventor: Lummes, Stephen Edward, Stroud, Gloucestershire, GL5 2PS (GB); Sullivan, Jonathan Shamus, Gloucestershire, GL12 8SF (GB)
(74) Representative: Jackson, John Timothy

(56) References cited:
- DE-A- 3 503 637
- DE-A- 3 830 904
- DE-A- 4 300 745

## Description

This invention relates to an arm for holding a probe in a machine tool.

It is known to mount a toolsetting probe in a machine tool. The probe is mounted to the bed or table or other fixed structure of the machine tool, such that a cutting tool can be moved into contact with it. This enables the location of a cutting tip of the tool to be established, in order to set up offsets associated with the tool for use by the numerical control of the machine.

In many machines, the toolsetting probe would get in the way if permanently mounted in the required position. Consequently, it is known to mount it on a movable arm, which in turn is mounted on fixed structure of the machine. For example, GB-A-2277593 describes a probe arm according to the preamble of claim 1. A motor swivels the arm about its rotational axis, to index it between an operative position and an inoperative position. In the operative position, the position of the arm (and thus of the probe) is precisely defined by a kinematic support. This ensures highly repeatable positioning of the probe in the operative position, so that the probe is capable of highly repeatable measurements and accurate toolsetting.

However, in many machine tools such a swivelling arm would be unsuitable because there would be no appropriate position in which to mount it, or because the arm would still get in the way when indexed to the inoperative position. The embodiments of the present invention therefore provide linear motion between the operative and inoperative positions, optionally with an additional swivelling motion.

According to the present invention, a probe arm for a machine tool comprises:
a fixed member for attachment to the machine tool;
an elongate movable arm member for carrying a probe, the movable arm member having a longitudinal axis;
a guide which guides the movement of the movable arm member between an inoperative position and an operative position;
a stop between the fixed member and the movable arm member, which defines said operative position and prevents further movement of the movable arm member past the operative position, said stop comprising first elements on the fixed member and second elements on the movable member, the first and second elements co-operating with each other in the operative position to constrain the degrees of freedom of the movable arm member kinematically, thereby precisely defining the operative position of the movable arm member; and
a biasing device acting on the movable arm member, said biasing device providing a force to urge said first and second elements together in the operative position;
   characterised in that the fixed member forms a housing, and the guide guides the movement of the movable arm member for linear movement in the direction of the longitudinal axis between the inoperative position and the operative position, the movable arm member being retracted into the housing in the inoperative position and extending away from the housing in the operative position.

In a preferred embodiment, the guide means guides the movable arm member to undergo a rotary movement in addition to the linear movement. The rotary movement may be a swivel movement about said axis.

Preferably the guide means is arranged to provide no constraint on the movable member in the operative position, in order not to disturb the kinematic constraints provided by said elements on the fixed and movable members.

Preferred embodiments of the invention will now be described by way of example, with reference to the accompanying drawings, wherein:
Fig 1 is an isometric view of a probe arm, part of a housing being removed;
Fig 2 shows part of the probe arm of Fig 1, with several different positions of a probe during movement;
Fig 3 is an isometric view of a part of the probe arm, showing features which are hidden in Fig 1;
Fig 4 is a plan view of a rotation guide block used in the probe arm of Fig 1;
Fig 5 is an isometric view of the rotation guide block of Fig 4, indicating rotary motion of follower pins of the probe arm; and
Fig 6 is a cross-section of a coupling mechanism of the probe arm.

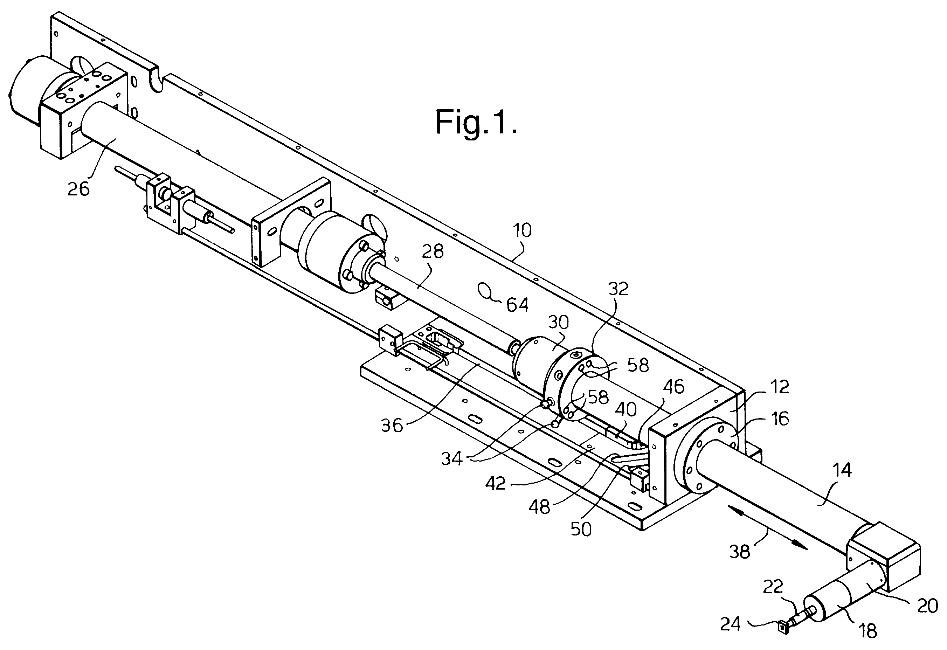

The probe arm shown in Figs 1-3 comprises a housing 10, for mounting on fixed structure of a machine tool. A movable arm member 14 projects through a bearing 16 in an end plate 12 of the housing. The free end of the arm member 14 carries a probe 18 on a lateral extension 20. The probe 18 may for example be a touch trigger probe of the type described in U.S. Patent No. 4,153,998, and has a deflectable stylus 22 carrying a stylus tip 24. This stylus tip 24 is of the square type normally used for setting the cutting tools in a machine tool. However, the probe arm may be mounted in a suitable way for measuring a workpiece, in which case another appropriate stylus tip would be used.

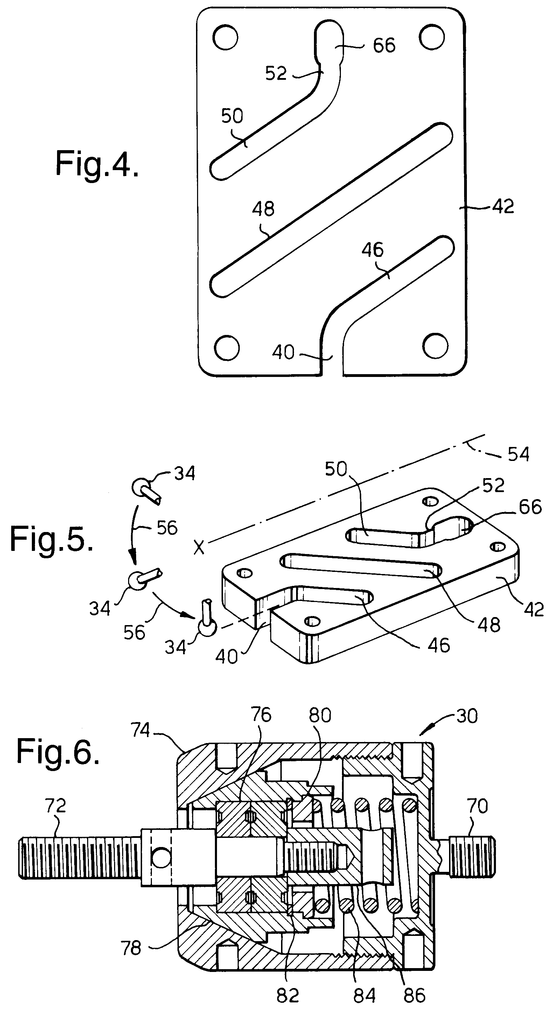

The movable arm member 14 can be extended and retracted longitudinally through the bearing 16 as indicated by arrows 38, by means of a hydraulic ram 26 having a piston rod 28. The piston rod 28 is connected to the movable arm member 14 through a coupling mechanism 30, described in more detail below with respect to Fig 6. Fig 1 shows the arm member 14 midway between a fully retracted, inoperative position, and a fully extended, operative position. Of course, the ram 26 may be replaced by one which is actuated pneumatically, or by an electric motor.

Within the housing 10, a collar 32 is fixed to the movable arm member 14. This collar carries three radially projecting follower pins 34; in Fig 1 only two of these pins can be seen, while the third projects radially downwards and engages a slot 36 in the floor of the housing 10. The slot 36 extends longitudinally, parallel to the arm member 14 and acts with the downwardly projecting follower pin 34 to guide the movable arm 14 as it is pushed along its longitudinal axis by the hydraulic ram 26. While this pin 34 follows the longitudinal slot 36, it ensures that the probe 18 remains in the horizontal attitude shown in Fig 1.

As it moves towards the operative position along the slot 36, the downwardly projecting follower pin 34 passes into an entry slot 40 in a rotation guiding block 42. The function of this block is to guide the movable arm 14 in a swivelling motion about its longitudinal axis, as it continues to be pushed linearly towards the operative position by the ram 26. The rotation guiding block 42 is shown in more detail in Figs 4 and 5 (which, however, show the block arranged to produce rotation in the opposite sense to that shown in Figs 1-3).

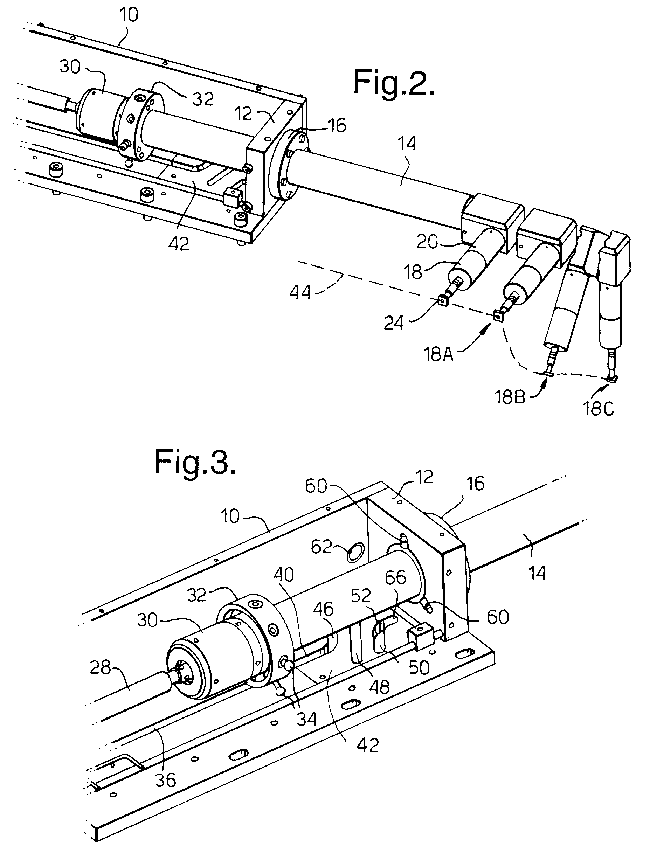

Fig 2 shows the motion of the movable arm 14 and the probe 18 on its extension 20, as the arm approaches the operative position and is caused to swivel by the rotation guiding block 42. The probe adopts successive positions 18A,18B,18C, with its stylus tip 24 following the path shown by broken line 44, until the probe has swivelled through 90°.

To produce this swivelling, the entry slot 40 of the block 42 leads the downwardly projecting follower pin 34 around a smooth curve into an oblique slot portion 46. As the downwardly projecting follower pin 34 follows this oblique portion, it causes the arm 14 to commence its swivelling, simultaneously with the linear movement. Fig 5 shows the longitudinal rotational axis 54 of the arm 14, about which the follower pins 34 rotate as indicated by arrows 56. After a certain amount of swivelling, the downwardly projecting pin 34 will start to lift out of the slot portion 46. At the same time, however, the next pin 34 will enter an oblique slot 48 in the block 42, which continues to guide the swivelling movement of the arm 14 as it extends linearly. Eventually, as the linear motion continues, this pin 34 too leaves the oblique slot 48, but the final pin 34 simultaneously engages in a further oblique slot portion 50. This continues to guide the swivelling motion, until the slot portion 50 leads around a smooth curve to an axially extending slot portion 52. The probe 18 has now swivelled through the 90°, seen in Fig 2, and the slot portion 52 guides it axially for a short distance to the fully operative position.

It will be seen that the engagement of the follower pins 34 in the oblique slot portions 46,48,50 effectively acts as a screw to guide the swivelling motion of the arm 14 as it is extended axially. The amount and the rotational sense of the swivelling is governed by these oblique slot portions. For example, the rotational sense can be reversed simply by fixing the block 42 upside down in the housing 10 and fixing the pins 34 on the other side of the collar 32. (The block 42 is shown upside down in Figs 4-5, compared with Figs 1-3.) The arm may be swivelled through an angle greater than 90° by the provision of one or more extra oblique slots 48, with a corresponding extra number of follower pins 34 spaced at appropriate positions around the collar 32. Similarly, if a swivel angle less than 90° is required, then only two follower pins 34 may be used, the slot 48 may be omitted and the slot portion 50 positioned in its place.

Of course, other guide arrangements than the pins 34 and slots 36,46,48,50 can be envisaged. For example, static pins may be provided on the floor of the housing, engaging in appropriately directed slots provided on the collar 32. Where no swivelling motion is required, the bearing 16 and/or the ram 26 may act as the guide.

In the operative position 18C seen in Fig 2, it is desired that the probe 18 should be held repeatably in a precisely defined location, so that the measurements or toolsetting performed with the probe may be repeatable. This is achieved by a kinematic support arrangement, which will now be described.

For the kinematic support, the collar 32 is provided with three forward facing pairs of balls 58 (one pair of which is hidden in Fig 1). These pairs of balls are spaced at 120° from each other around the longitudinal axis of the arm 14. Three similarly spaced cylindrical elements 60 face rearwards from the end plate 12 of the housing 10 - two of the elements 60 are visible in Fig 3. In the operative position, the pairs of balls 58 are guided into engagement with the respective elements 60 by the action of the pins 34, slot 36 and guide block 42. This engagement constrains the degrees of freedom of the movable member 14 kinematically to precisely define the operative position.

Of course, any other arrangement of elements co-operating to produce a kinematic support may be used - see for example the alternative arrangements described by H.J.J. Braddick in "Mechanical Design of Laboratory Apparatus", Chapman & Hall, London, 1960, pages 11-30. The three cylindrical elements 60 could be replaced by three balls, co-operating with three V-grooves which replace the pairs of balls 58. Another alternative described by Braddick again has three balls to replace the three cylindrical elements 60, but uses one trihedral recess, one V-groove and one flat surface instead of three V-grooves. The trihedral recess can be replaced by a nest of three balls, or simply by a conical recess. In any of these alternatives, of course, it does not matter which group of elements are provided on the collar 32 and which on the end plate 12; for example the pairs of balls 58 could be on the end plate 12, and the cylindrical elements 60 could be on the collar 32.

If desired, a proximity sensor may be fitted in a hole 62 in the housing 10 (Fig 3), to detect the presence of the collar 32 and thus give an indication that the arm 14 has reached the operative position. Similarly, a proximity sensor may be fitted in a hole 64 (Fig 1) to detect the collar 32 when the arm 14 is fully retracted into the inoperative position.

In the operative position, it is important that the six degrees of freedom of the arm 14 should be constrained only by the kinematic support elements 58,60, and that no substantial additional constraints should be provided by (for example) the bearing 16, the pins 34, or by the mechanism 30 by which the arm 14 is coupled to the piston rod 28. In the case of the bearing 16, this is achieved by using a bearing with a slight amount of play. In order to reduce the amount of play which is necessary, so that the arm 14 slides smoothly, the bearing 16 is not securely bolted to the end plate 12 of the housing until after the arm 14 has been assembled within it. The arm 14 is biased into the operative position with the balls 58 kinematically engaging the cylindrical elements 60, and the bearing 16 is finally secured to the end plate 12 with the arm 14 in this position.

It will also be noted, e.g. from Fig 4, that the final slot portion 52 in the rotation guiding block 42 has an enlarged end section 66. This ensures that the corresponding follower pin 34 is not constrained in the slot when the arm is in the operative position, so that it too provides no additional constraint to disturb the kinematic support.

The connection between the arm 14 and the piston rod 28 of the hydraulic ram is provided by the coupling mechanism 30 mentioned previously. This is seen in more detail in Fig 6, in the condition before the arm 14 reaches the operative position. The mechanism 30 has a body 74 with an end cap 70 by which it is secured to the inner end of the arm 14.

The body 74 has an internal conical face which (in the inoperative position) mates with a conical insert 78. The insert 78 is mounted rotatably on an axle 72, via a rotary bearing 76, held in place by a circlip 82. The axle 72 is threaded to connect it with the end of the piston rod 28. This threading allows the longitudinal position of the axle 72 with respect to the piston rod 28 to be adjusted during assembly.

In the inoperative position as shown in Fig 6, the conical insert 78 is biased into the internal taper of the body 74 by a compression spring 84, acting through a shoulder washer 80. When the hydraulic ram 26 is activated, the coupling mechanism remains in this condition throughout the time that the downwardly projecting follower pin 34 travels along the longitudinal slot 36 in the floor of the housing 10. It also remains in this condition when the arm 14 is swivelled by the engagement of the follower pins 34 in the slot portions 46,48,50. As this swivelling takes place, the end cap 70, body 74 and insert 78 of the coupling mechanism 30 rotate relative to the axle 72 on the bearing 76.

When the operative position is reached and the kinematic support elements 58,60 engage, further axial movement of the body 74 is of course prevented. Continued axial movement of the piston rod 28 and axle 72 causes the conical insert 78 to separate from the internal taper of the body 74, compressing the spring 84. During assembly, the axial position of the axle 72 on the piston rod 28 is adjusted such that, at the end of the stroke of the ram 26, the insert 78 is free of all contact inside the body 74. The only connection between the axle 72 and the end cap 70 is then via the spring 84. This decouples the piston rod 28 of the ram 26 from the arm 14, and ensures that the ram does not provide any constraint which would interfere with the kinematic support.

The ram 26 has a reasonably well defined end position to its stroke, so that, each time it is operated, the spring 84 is compressed by the same amount. The spring 84 provides the entire biasing force holding the kinematic support elements 58,60 in engagement with each other. Because it is compressed by the same amount each time, the biasing force provided by the spring 84 is fairly repeatable. This is advantageous, since it helps to assure the repeatable operative position of the arm 14 provided by the kinematic support elements.

Inside the body 74 of the coupling mechanism 30, a stop member 86 is screwed onto the end of the axle 72. This acts to secure the bearing 76 onto the axle 72. It also acts as a safety stop, in the event that the arm 14 should hit an unexpected obstruction as it is extended. In this event, the stop member 86 will hit the end cap 70, so that the thrust of the hydraulic ram is transmitted directly from the axle 72 to the end cap 70 and does not damage components such as the bearing 76.

In some applications, the swivelling action provided by the rotation guide block 42 may not be required. In this case, the slot 36 in the floor of the housing may extend right up to an enlarged end section similar to the slot section 66 seen in Fig 4. The block 42 is then unnecessary, but if it is desired to reduce manufacturing costs by using common components for different designs of arm, then the block 42 may be replaced by a similar block which has only a longitudinal extension of the slot 36, plus an enlarged end section 66, but no oblique slot portions 46,48,50. Of course, only one of the follower pins 34 is then needed, engaging in the slot 36.

Where no swivel action is required, then the bearing 16 may be simpler since it need only provide for sliding movement of the arm 14 and not rotation. It would also be possible to omit the bearing 76 in the coupling mechanism 30, the conical insert 78 being fast with the axle 72. However, it is desirable to retain the bearing 76 since it facilitates the longitudinal adjustment of the threaded axle 72 on the end of the piston rod 28.

In one possible application of the probe arm described, it may be mounted next to or above the rotatable chuck of a lathe, parallel to the axis of rotation of the chuck. When the probe 18 is to be used to set a cutting tool mounted in a tool post or turret of the lathe, the arm is extended from its inoperative, retracted position. First of all, the linear motion of the arm positions the probe generally between the chuck and the tool. Towards the end of the linear motion, the swivelling action brings the stylus tip 24 of the probe 18 onto the centre line of the lathe, into the appropriate operative position for setting the tool. The tool is then brought into contact with the stylus tip 24 by operating the slidable carriages upon which the tool post or turret is mounted.

Of course, many other applications can be envisaged, in which the probe arm is mounted in other positions on a lathe or on another machine tool. In some applications, when the probe 18 is in the operative position, it may be used for measuring a workpiece rather than a cutting tool, in which case an appropriate stylus tip will be used in place of the tip 24. This can be of use, for example, in machine tools which can pick up the workpiece in a movable spindle. The spindle then brings various surfaces of the workpiece which are to be measured into contact with the stylus tip of the probe.

## Claims

1. A probe arm for a machine tool, comprising:
a fixed member (10) for attachment to the machine tool;
an elongate movable arm member (14) for carrying a probe, the movable arm member having a longitudinal axis;
a guide (16,26,36) which guides the movement of the movable arm member between an inoperative position and an operative position;
a stop between the fixed member and the movable arm member, which defines said operative position and prevents further movement of the movable arm member past the operative position, said stop comprising first elements (60) on the fixed member and second elements (58) on the movable member, the first and second elements co-operating with each other in the operative position to constrain the degrees of freedom of the movable arm member kinematically, thereby precisely defining the operative position of the movable arm member; and
a biasing device (84) acting on the movable arm member, said biasing device providing a force to urge said first and second elements (58,60) together in the operative position;
characterised in that the fixed member forms a housing (10), and the guide (16,26,36) guides the movement of the movable arm member (14) for linear movement in the direction of the longitudinal axis between the inoperative position and the operative position, the movable arm member being retracted into the housing in the inoperative position and extending away from the housing in the operative position.

2. A probe arm according to claim 1, including a ram (26) acting on the movable arm member (14) for driving it between the inoperative position and the operative position.

3. A probe arm according to claim 2, including a coupling mechanism (30) between the ram (26) and the movable arm member (14), which is operable to decouple the ram from the movable arm member in the operative position.

4. A probe arm according to any one of the preceding claims, wherein said biasing device comprises a spring (84) acting between the movable arm member (14) and a further movable member (28), the further movable member moving by a repeatable amount after the movable arm member reaches the operative position, said repeatable amount of movement causing the spring to provide a repeatable force for urging said first and second elements (58,60) together in the operative position.

5. A probe arm according to claim 4, wherein the further movable member is a piston of a ram (26) which drives the movable arm member (14) between the inoperative position and the operative position.

6. A probe arm according to any one of the preceding claims, wherein the biasing device (84) forms part of a coupling mechanism (30) between the movable arm member (14) and a ram (26) which acts on the movable arm member for driving it between the inoperative position and the operative position, and wherein the coupling mechanism (30) is operable to decouple the ram from the movable arm member in the operative position, so that the ram is then connected to the movable arm member only through the biasing device.

7. A probe arm according to any one of the preceding claims, wherein said guide (36) includes a guide portion (46,48,50) which acts on the movable arm member (14) to provide a rotary or swivelling motion thereof about said longitudinal axis as it moves into the operative position, in addition to said linear movement in the direction of said axis.

8. A probe arm according to claim 7, wherein said guide portion (46,48,50) is formed in a guide member (42) which can be replaced to guide the movable arm member with a different motion.

9. A probe arm according to claim 7 or claim 8, wherein said guide portion (46,48,50) is formed in a guide member (42) which is reversible to provide said rotary or swivelling motion in a reverse sense.

## Patentansprüche

1. Sondenarm für eine Werkzeugmaschine, umfassend:
ein feststehendes Glied (10) zum Befestigen an der Werkzeugmaschine;
ein längliches bewegbares Armglied (14) zum Tragen einer Sonde, wobei das bewegbare Armglied eine Längsachse aufweist;
eine Führung (16, 26, 36), die eine Bewegung des bewegbaren Armgliedes zwischen einer Ruhestellung und einer Betriebsstellung führt;
eine Sperreinrichtung zwischen dem feststehenden Glied und dem bewegbaren Armglied, welche die Betriebsstellung definiert und eine weitere Bewegung des bewegbaren Armgliedes über die Betriebsstellung hinaus verhindert, wobei die Sperreinrichtung erste Elemente (60) an dem feststehenden Glied und zweite Elemente (58) an dem bewegbaren Glied umfaßt, wobei die ersten und zweiten Elemente in der Betriebsstellung miteinander zusammenwirken, um die Freiheitsgrade des bewegbaren Armgliedes kinematisch zu beschränken, wodurch die Betriebsstellung des bewegbaren Armgliedes genau definiert wird; und
eine Vorspannvorrichtung (84), die auf das bewegbare Armglied wirkt, wobei die Vorspannvorrichtung eine Kraft schafft, um die ersten und zweiten Elemente (58, 60) in der Betriebsstellung gegeneinander zu drücken;
dadurch **gekennzeichnet,**
daß das feststehende Glied ein Gehäuse (10) bildet, und die Führung (16, 26, 36) die Bewegung des bewegbaren Armgliedes (14) für eine Linearbewegung in der Richtung der Längsachse zwischen der Ruhestellung und der Betriebsstellung führt, wobei das bewegbare Armglied in der Ruhestellung in das Gehäuse zurückgezogen ist, und sich in der Betriebsstellung von dem Gehäuse weg erstreckt.

2. Sondenarm nach Anspruch 1, mit einer Ramme (26), die auf das bewegbare Armglied (14) wirkt, um es zwischen der Ruhestellung und der Betriebsstellung zu treiben.

3. Sondenarm nach Anspruch 2, mit einem Kopplungsmechanismus (30) zwischen der Ramme (26) und dem bewegbaren Armglied (14), der dazu dient, die Ramme in der Betriebsstellung von dem bewegbaren Armglied zu entkoppeln.

4. Sondenarm nach einem der vorhergehenden Ansprüche, wobei die Vorspannvorrichtung eine Feder (84) umfaßt, die zwischen dem bewegbaren Armglied (14) und einem weiteren bewegbaren Glied (28) wirkt, wobei das weitere bewegbare Glied um eine wiederholbare Größe bewegt wird, nachdem das bewegbare Armglied die Betriebsstellung erreicht, wobei die wiederholbare Bewegungsgröße bewirkt, daß die Feder eine wiederholbare Kraft schafft, um die ersten und zweiten Elemente (58, 60) in der Betriebsstellung gegeneinander zu drücken.

5. Sondenarm nach Anspruch 4, wobei das weitere bewegbare Glied ein Kolben einer Ramme (26) ist, der das bewegbare Armglied (14) zwischen der Ruhestellung und der Betriebsstellung treibt.

6. Sondenarm nach einem der vorhergehenden Ansprüche, wobei die Vorspannvorrichtung (84) einen Teil eines Kopplungsmechanismus (30) zwischen dem bewegbaren Armglied (14) und einer Ramme (26) bildet, die auf das bewegbare Armglied wirkt, um es zwischen der Ruhestellung und der Betriebsstellung zu treiben, und wobei der Kopplungsmechanismus (30) dazu dient, die Ramme in der Betriebsstellung von dem bewegbaren Armglied zu entkoppeln, so daß die Ramme dann mit dem bewegbaren Armglied nur durch die Vorspannvorrichtung verbunden ist.

7. Sondenarm nach einem der vorhergehenden Ansprüche, wobei die Führung (36) einen Führungsabschnitt (46, 48, 50) aufweist, der auf das bewegbare Armglied (14) wirkt, um, wenn es sich in die Betriebsstellung bewegt, zusätzlich zu der Linearbewegung in der Richtung der Achse dessen Dreh- oder Schwenkbewegung um die Längsachse vorzusehen.

8. Sondenarm nach Anspruch 7, wobei der Führungsabschnitt (46, 48, 50) in einem Führungsglied (42) ausgebildet ist, das ersetzt werden kann, um das bewegbare Armglied mit einer anderen Bewegung zu führen.

9. Sondenarm nach Anspruch 7 oder Anspruch 8, wobei der Führungsabschnitt (46, 48, 50) in einem Führungsglied (42) ausgebildet ist, das umkehrbar ist, um die Dreh- oder Schwenkbewegung in einem umgekehrten Sinn vorzusehen.

## Revendications

1. Un bras à sonde pour une machine-outil, comprenant:
un membre fixe (10) pour fixation à la machine-outil;
un membre bras mobile allongé (14) pour porter une sonde, le membre bras mobile ayant un axe longitudinal;
un guidage (16, 26, 36) qui guide le déplacement du membre bras mobile entre une position inopérante et une position opérante;
une butée entre le membre fixe et le membre bras mobile, qui définit ladite position opérante et empêche tout autre déplacement du membre bras mobile au-delà de la position opérante, ladite butée comprenant des premiers éléments (60) sur le membre fixe et des deuxièmes éléments (58) sur le membre mobile, les premiers et deuxièmes éléments coopérant les uns avec les autres dans la position opérante pour contraindre les degrés de liberté du membre bras mobile du point de vue cinématique, définissant ainsi précisément la position opérante du membre bras mobile; et
un dispositif d'inclinaison (84) agissant sur le membre bras mobile, ledit dispositif d'inclinaison fournissant une force pour inciter lesdits premiers et deuxièmes éléments (58, 60) à se réunir dans la position opérante;
caractérisé en ce que le membre fixe forme un logement (10), et le guidage (16, 26, 36) guide le déplacement du membre bras mobile (14) pour un déplacement linéaire dans le sens de l'axe longitudinal entre la position inopérante et la position opérante, le membre bras mobile étant rentré dans le logement dans la position inopérante et s'éloignant du logement dans la position opérante.

2. Un bras à sonde conformément à la revendication 1, comportant un vérin (26) agissant sur le membre bras mobile (14) pour le commander entre la position inopérante et la position opérante.

3. Un bras à sonde conformément à la revendication 2, comportant un mécanisme d'accouplement (30) entre le vérin (26) et le membre bras mobile (14), qui est utilisable pour désaccoupler le vérin du membre bras mobile dans la position opérante.

4. Un bras à sonde conformément à l'une quelconque des revendications précédentes, dans quoi ledit dispositif d'inclinaison comprend un ressort (84) agissant entre le membre bras mobile (14) et un autre membre mobile (28), l'autre membre mobile se déplaçant d'une distance répétable après que le membre bras mobile ait atteint la position opérante, ledit déplacement répétable faisant en sorte que le ressort fournisse une force répétable pour inciter lesdits premiers et deuxièmes éléments (58, 60) à se réunir dans la position opérante.

5. Un bras à sonde conformément à la revendication 4, dans quoi l'autre membre mobile est un piston d'un vérin (26) qui commande le membre bras mobile (14) entre la position inopérante et la position opérante.

6. Un bras à sonde conformément à l'une quelconque des revendications précédentes, dans quoi le dispositif d'inclinaison (84) fait partie d'un mécanisme d'accouplement (30) entre le membre bras mobile (14) et un vérin (26) qui agit sur le membre bras mobile pour le commander entre la position inopérante et la position opérante, et dans quoi le mécanisme d'accouplement (30) est utilisable pour désaccoupler le vérin du membre bras mobile dans la position opérante, de sorte que le vérin est ensuite connecté au membre bras mobile seulement par l'intermédiaire du dispositif d'inclinaison.

7. Un bras à sonde conformément à l'une quelconque des revendications précédentes, dans quoi ledit guidage (36) comporte une portion de guidage (46, 48, 50) qui agit sur le membre bras mobile (14) pour fournir un mouvement rotatif ou pivotant de ce dernier autour dudit axe longitudinal au fur et à mesure qu'il passe à la position opérante, en plus dudit déplacement linéaire dans le sens dudit axe.

8. Un bras à sonde conformément à la revendication 7, dans quoi ladite portion de guidage (46, 48, 50) est formée dans un membre de guidage (42) qui peut être remplacé pour guider le membre bras mobile avec un mouvement différent.

9. Un bras à sonde conformément à la revendication 7 ou la revendication 8, dans quoi ladite portion de guidage (46, 48, 50) est formée dans un membre de guidage (42) qui est réversible pour fournir ledit mouvement rotatif ou pivotant dans un sens inverse.
